# EUROPEAN PATENT SPECIFICATION

(11) **EP 3 092 838 B1**
(45) Date of publication and mention of the grant of the patent: **09.10.2019**
(21) Application number: 14726010.3
(22) Date of filing: 10.01.2014
(51) Int. Cl.: H04L 29/06, H04W 12/08, H04W 12/02, H04M 1/66, H04W 88/02

(54) **SECURE VOICE AND DATA METHOD AND SYSTEM**
SICHERES SPRACH- UND DATENVERFAHREN UND -SYSTEM
PROCÉDÉ ET SYSTÈME POUR LA SÉCURISATION DE VOIX ET DE DONNÉES

(43) Date of publication of application: 16.11.2016
(73) Proprietor: Telsy Elettronica e Telecomunicazioni S.p.A, 10149 Torino (IT)
(72) Inventor: CARRON, Andrea, 10149 Torino (IT); CUCIZ, Sandro, 10149 Torino (IT); MONTORSELLI, Giannantonio, 10149 Torino (IT); MORGARI, Guglielmo, 10149 Torino (IT); PARTESCANO, Fabrizio, 10149 Torino (IT); SPICCIOLA, Maria, 10149 Torino (IT); TESTA, Oliviero, 10149 Torino (IT); VACCA, Fabrizio, 10149 Torino (IT)
(74) Representative: Murgitroyd & Company
(86) International application number: PCT/IT2014/000007
(87) International publication number: WO 2015/104726

(56) References cited:
- EP-A2- 0 680 171
- US-A1- 2007 118 558
- US-A1- 2011 211 698

## Description

### Field of the invention

The present invention relates to telecommunication technology, in particular a method and system for improving the security of a communication device (e.g. a smartphone), particularly when used as a voice and data terminal.

### Background of the Invention

With the increasing diffusion of smartphones, i.e. mobile telephones with enhanced processing capabilities, the issue of security in mobile communications is becoming one of the main problems. The smartphone pervasive diffusion offers new possibilities together with serious threats. Mobile communication privacy is attracting a huge interest: this is well represented by the large number of applications aiming at protecting communications by means of encryption. The basic idea is to have a security application running on the smartphone: however to have a secure application running into an insecure operating environment poses serious challenges to information confidentiality.

Looking to existing prior art it is possible to observe how all the secure voice solutions rely on high level applications that try to secure the transmission of voice over unsecure channels. However all the existing solutions assume the OS environment to be trusted while the threats are limited to the communication channel. While this is in general a well understood approach in high level security domains, when the hardware and the software components are under the direct control of the manufacturer, this would not be the case in smartphone environment. Smartphones pose new challenges in the sense that they present all the security problems typical of desktop environments, introducing a whole new class of menaces such as viruses, Trojans and malware. In such a complex environment assuming that attacks can come only from the network is a over simplistic approach. In this invention we propose a system able to protect the confidentiality of voice and data both at the OS as well as at the network level. EP0435094B1 discloses a security kernel interface for simplifying integration of cryptographic services to computer or communication systems however this work does not address the typical challenges coming from a mobile device. Applicants have determined that besides the cryptographic framework and how it can be used at kernel level it is important to address:
- How and where keys are kept inside the unit;
- What type of key management is implemented;
- How sensitive data (i.e. voice samples) are preserved from attacks inside the mobile device;
- What kind of lifecycle is implemented inside the machine and how this is related to emergency erasing procedures.

Documents US2011/211698 and EP0680171 show other examples of methods for securing communications according to the prior art.

It is an object of the present invention to overcome some of the drawbacks of the prior art

### Summary of the Invention

According to a first aspect of the present invention there is provided a method according to claim 1.

In a preferred embodiment the Security Core module is implemented by hardware and preferably includes a smart-card chip, e.g. a MicroSD card.

The above mentioned user communication applications can include: voice applications, data communication applications such as email, collaboration application, instant messaging.

In an embodiment of the present invention any input/output functions of the smartphone are disabled during telephone standby periods.

Also the emergency procedure includes preventing any communications between the at least one user communication application and the outside network. In a further embodiment, the emergency procedure includes erasing sensible information to avoid un-authorised access to protected data. In another possible embodiment the emergency procedure includes providing to the un-authorised source dummy audio samples.

Preferably the presence of the Security Kernel Module cannot be detected by un-authorised sources.

In a second aspect of the invention we provide a communication device according to claim 10.

In another aspect of the present invention we provide a smartphone for secure communication including one or more components adapted to perform the above method.

In yet another aspect of the present invention we provide a data processing system which includes components adapted to implement the above method.

A still further aspect of the present invention provides a computer program for performing the above described method.

The present invention provides a methodology which overcomes the approach of secure apps on top of insecure operating environments by means of moving all the security sensitive parts into a controlled container and to restrict the access to it by means of hardening. In particular as far as the voice encryption is concerned it is vital to avoid access to sensitive information before the encryption takes place since this can void the protection provided by the encryption. In an embodiment of the present invention the security kernel ensures that voice samples are segregated from the operating system and encrypted directly in kernel space. In a preferred embodiment of the present invention a secure method for controlling the microphones of the smartphone is provided. This method avoids that the phone can be exploited as a spy-phone, recording sounds and voices while in standby. In an embodiment the smartphone is hardened since the operating system is closed and no apps can be added or upgraded once the firmware is deployed. In an embodiment of the invention GPS data are secured in order to prevent unauthorized access to them. GPS data, similarly to audio ones, can be encrypted in kernel space restricting their access only to cryptographically trusted apps.

Further embodiments of the invention are provided in the appended dependent claims.

### Brief description of the drawings

The invention itself, as well as further features and the advantages thereof, will be best understood with reference to the following detailed description, given purely by way of a non-restrictive indication, to be read in conjunction with the accompanying drawings, in which:
Figure 1 is a schematic block diagram of a system implementing the method according to a preferred embodiment of the present invention;
Figure 2 shows the components of a generic computer system used in the preferred embodiment of the invention;
Figure 3 is a schematic representation of a possible implementation of the present invention, including main software components;
Figure 4 shows a diagram of a Finite State Machine (FSM) representing the possible states of Security Kernel Module according to a preferred embodiment of the present invention;
Figure 5 shows schematically a protocol data unit used in an embodiment of the present invention;
Figure 6 shows a schematic representation of a possible specific secure communication implementation of the present invention, with block diagram showing interactions among sw and hw modules
Figure 7 shows a diagram describing the flow of activities relating to an illustrative implementation of the method.

### Detailed Description

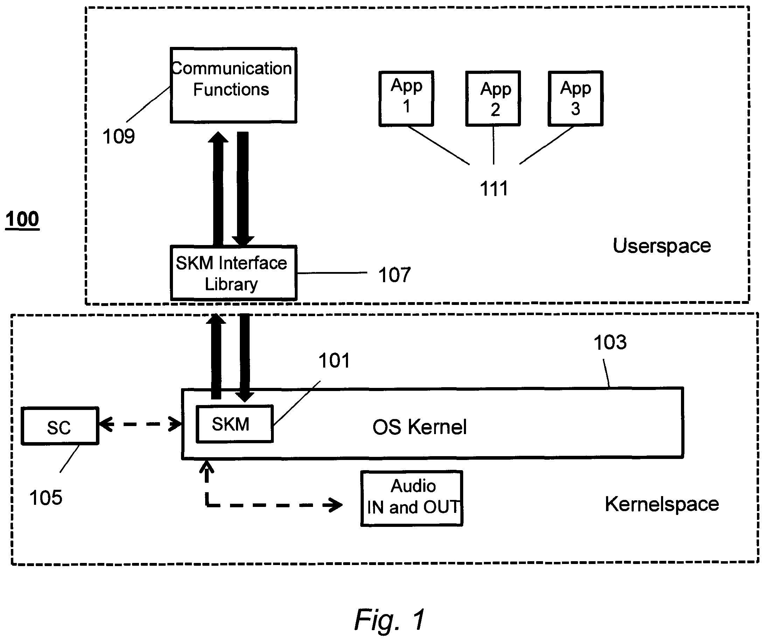

With reference to Figure 1 a system according to a preferred embodiment of the present invention is illustrated. In the presently described embodiment the system 100 is implemented in a smartphone; more generally it could be implemented in any communication system having voice communication features and data processing capabilities. The system ensures easy communications and use, while obtaining an enhanced immunity against attacks coming from malware applications and some more sophisticated threats. In particular the major objective is to safeguard capturing of audio channel in both calling and stand-by situations. Traditional, application-based voice encryption solutions suffer from the fact that it is extremely hard to safeguard audio channels, considering the complexity of modern mobile operating systems.

As shown in Figure 1 a Security Kernel Module 101 supervises all the security sensitive subsystems and resources of the system. Access to systems under Security Kernel Module management can be obtained from applications only through strong authentication mechanisms. In a preferred embodiment of the present invention, Security Kernel Module 101 is embedded in the Operating System Kernel 103.

In a preferred embodiment of the present invention the Security Kernel Module 101 maintains full control of all audio sources and outputs of the smartphone platform. These devices can be activated by Security Kernel Module 101 only in limited predetermined circumstances. These circumstances may include for example:
- a voice call request in plain, e.g. using 2G/3G/4G channel;
- a voice call in crypto on data channel.

Audio sources should be preferably kept off during standby or every time when the phone is not performing one of the above listed activities.

Security Kernel Module 101 should have complete control of audio paths: this holds for both the record as well as the play streams. Security Kernel Module 101 controls and monitors all the access to the audio data, implementing a strict security mechanism (which we call Mandatory Access Control (MAC) mechanism) for all the components that need to gain access to audio. The Security Kernel Module 101 audio samples are only processed by those applications that are authenticated by the security kernel.

As a possible additional feature, applications that are not authenticated with Security Kernel Module 101 will receive dummy audio samples. Conversely, all the audio samples written to the system (playout) are dropped. Ideally an application not authenticated with Security Kernel Module 101 shall not be able to detect Security Kernel Module 101 presence.

In a preferred embodiment, all operating system kernel modules are cryptographically signed. Signature checking is performed by Security Kernel Module 101 before the module is actually plugged into the system. Key material, algorithms and mechanisms can be stored in a dedicated hardware crypto module called 105 which we call Security Core (SC). The access to SC 105 can only be requested and performed by the Security Kernel Module 101; all other modules that need to perform operations on SC 105 shall first authenticate with Security Kernel Module 101 requesting later the operations to Security Kernel Module 101. Security Kernel Module 101 shall act as a proxy, forwarding to SC 105 all the requests. In the present example the Security Core 105 is implemented with a dedicated smartcard chip which presents a MicroSD card form factor. It will be referred in the following as MicroSC. The MicroSC card is used to implement all the relevant security functions demanded to the SC. However, those skilled in the art will appreciate that other implementations are possible, e.g. it can be used an external token such as a Bluetooth token or a Near Field Communication device. Another possible implementation can be obtained using a dedicated USB token: the necessary feature of SC 105 is that the selected device would be able to assure the integrity of the crypto environment preserving secret keys and algorithm's parameters to be revealed. All communications between application and Security Kernel Module 101 are performed in crypto: in a preferred embodiment of the present invention, a dedicated security protocol is used for providing both confidentiality and integrity. Voice encryption shall be performed at the lowest possible abstraction level. Ideally voice encryption is implemented as a Security Kernel Module 101 extension, keeping all the clear voice Pulsed Code Modulation (PCM) data inside the Security Kernel Module 101 perimeter. Applications dealing with secure voice shall interact with Security Kernel Module 101 to receive the result of this encryption process.

Security Kernel Module 101 shall control all read and write operations to the main flash memory. Using this mechanism Security Kernel Module 101 shall enforce read only partitions and read only files. In case of a write attempt to a Security Kernel Module 101 enforced read-only file, the to-be written data shall be discarded and the write operation shall return positively, as if the write operation succeeded.

Security Kernel Module 101 shall ideally control the USB port functionalities. Depending upon the security policies implemented in the system it shall be possible to decide USB port behavior. As an example it could be decided whether the USB port should only function as a charging interface, without any possible communication activities or, on the contrary allowing a secure channel function: in this last case, all communications on the interface shall be cryptographically protected (for confidentiality and integrity).

Other possible functions of Security Kernel Module 101 can be:
- control WiFi radio operation, enabling or disabling it;
- control Bluetooth radio operation, enabling or disabling it;
- control GPS module. Applications that are not authenticated with Security Kernel Module 101 could receive fake GPS data. Depending on the application Security Kernel Module 101 can decide to encrypt GPS coordinates, providing them to applications directly in encrypted form.

In a preferred embodiment, application installation shall be performed under direct control of Security Kernel Module 101. Third party installation service should be removed or, alternatively, they should be unable to execute correctly. Security Kernel Module 101 shall only accept software packages originated by authorized sources.

Another possible feature for Security Kernel Module 101 is that of preventing any Over The Air (OTA) firmware update.

Furthermore Security Kernel Module 101 may:
- inhibit the possibility of install firmware parts when the phone is kept in recovery mode;
- provide to applications an Application Programming Interface (API) enabling the possibility to cipher and/or digital sign a portion of data, directly from the application layer. As stated before all the communications between application layer and Security Kernel Module 101 should be carried out in encrypted form;
- provide a method to assure a complete wipe of cryptographic material (keys, algorithms, temporary keys, ...) in the event of an emergency erase (usually called "zeroization"). In case of emergency the user can decide to zeroize the unit to safely delete all the secrets contained in it. When zeroization occurs SKM must notify SC, in order to remove all keys and algorithms stored in it;
- provide a method to protect user data while they are stored on the mobile device (Data at Rest). This protection shall be implemented by full disk encryption of the data part of the flash. This mechanism is useful to protect against data leakage from a lost or stolen phone;
- provide a method to encrypt and decrypt binary code. These methods are used to protect sensitive binary code of the system (e.g. shared libraries containing intellectual properties, critical security components, ...) so that they can be loaded upon request and when needed.

SKM Interface Library 107 is a functional block devoted to provide a proper abstraction layer between Userspace and Kernelspace security relevant components. Its main purpose is hence to make all the services offered by SKM 101 to the Communication Functions 109. These services are used by the Communication Functions 109 to implement a Voice Over IP (VoIP). This VoIP service is used to convey secure voice services using end-to-end encryption. This service is used by the VoIP frontend application referred as 111 in Figure 1. As mentioned above, the present invention aims at providing a secure mobile phone with smartphone capabilities but with an augmented strength towards spyware and malware applications. This strength is obtained through a series of cryptographic mechanisms that will be detailed in the following paragraphs.

Those skilled in the art will appreciate that the method disclosed in the present invention can be applied to several different environments. Furthermore the meaning of Security Kernel Module can include the use of the services offered by the SC under the MicroSC form as described above. The Security Core is a key component which includes software components or possibly a combination of software and hardware. The Security Core module can be implemented in several different state of the art ways: it could be a dedicated hardware crypto module, e.g. using a dedicated security processor or an external module connected to the smartphone through a proper interface or it could include a software component (i.e. library).

To ensure the best possible security coverage and the deepest control capabilities Security Kernel Module 101 is run at operating system's kernel level. Additionally, Security Kernel Module is to be thought of as a device specific security component: each unit has a dedicated Security Kernel Module that can only run on that particular phone. If two users would try to exchange their Security Kernel Module all the security related part of the phone will be unavailable. Conversely also the SC is programmed to be paired with a given Security Kernel Module: this pairing is based on mutual authentication between SC and Security Kernel Module.

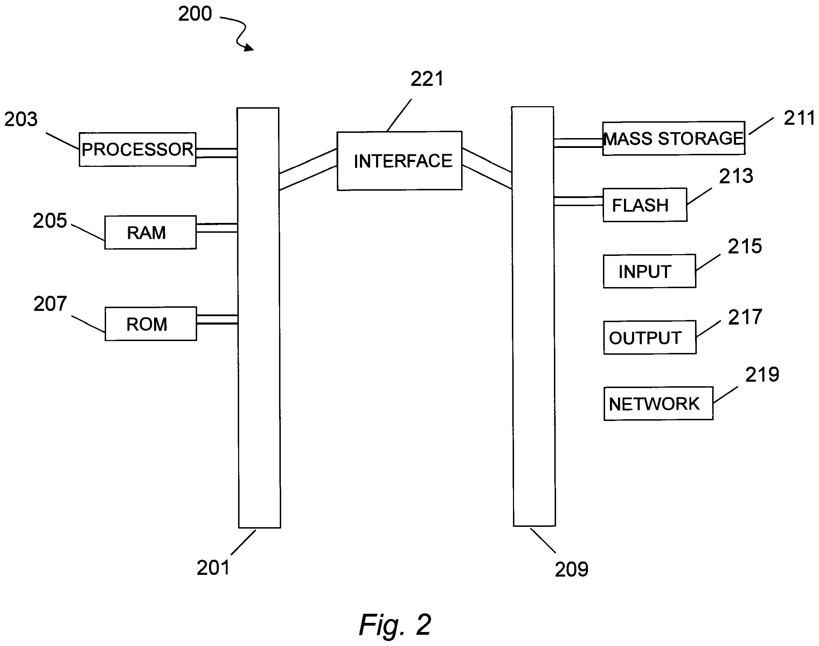

As shown in Figure 2, a generic computer of the system (e.g. mobile computer unit, server, repository, network router) is denoted with 200. The computer 200 is formed by several units that are connected in parallel to a system bus 201. In detail, one or more microprocessors 203 control operation of the computer 200; a RAM 205 is directly used as a working memory by the microprocessors 203, and a ROM 207 stores basic code for a bootstrap of the computer 200. Peripheral units are clustered around a local bus 209 (by means of respective interfaces). Particularly, a mass memory consists of a mass storage device (e.g. a solid state drive) 211 and at least one persistent storage such as FLASH memory 213.

Moreover, the computer 200 includes input devices 215 (for example, a keyboard and a mouse and/or a touch sensitive device), and output devices 217 (for example, a display, a screen and a printer). A Network Interface 219 is used to connect the computer 200 to the network: the network can be either a wired network or a wireless telecommunication network. An interface 221 puts in communication the system bus 201 with the local bus 209. Each of the microprocessor 203 and the interface unit 221 can operate as master agents requesting an access to the system bus 201 for transmitting information.

Similar considerations apply if the system has a different topology, or it is based on other networks. Alternatively, the computers may have a different structure, include equivalent units, or consist of other data processing entities (such as PDAs, mobile phones, and the like).

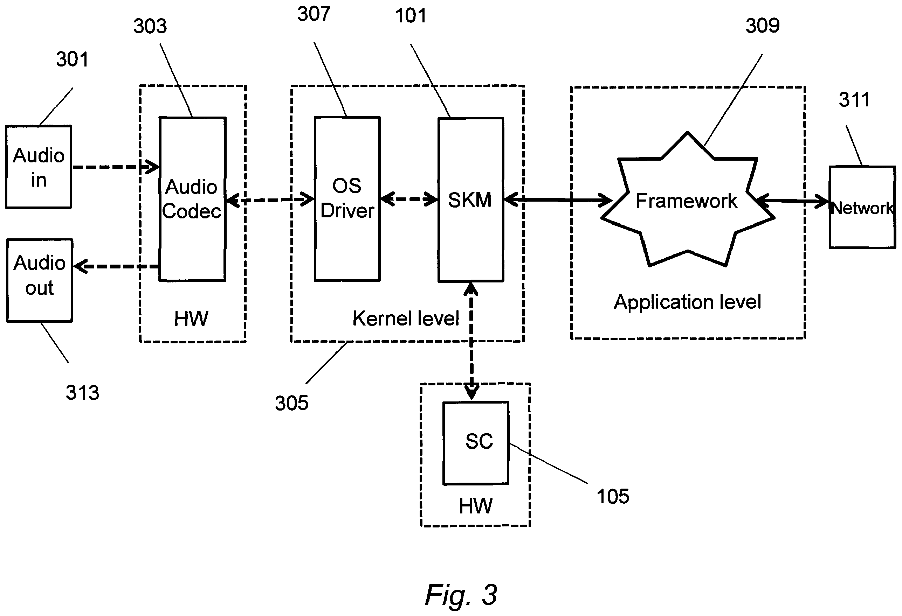

Figure 3 shows the main software components of a system according to a preferred embodiment of the present invention. The system of Figure 3 implements a secure voice application which is built around Security Kernel Module. It can be noted that "internal" and "external" signal paths are connected only through Security Kernel Module 101. External paths in Figure 3 are represented with solid lines, while internal paths are with dotted lines. This strict separation implies that no access from outside can be obtained unless passing through Security Kernel Module.

As a specific embodiment we provide now an example of secure voice communication system implemented on an Android audio device, e.g. Samsung Galaxy S2™ or Samsung Galaxy S3™.

In the example shown in Figure 3, analog audio signal, coming from a microphone 301, is firstly converted into digital samples by audio codec 303. Digital samples are then transferred to Application Processor (AP) 305 where the operating system runs. The first software component that treats audio samples is device driver 307 responsible for audio codec management. In a preferred embodiment of the present invention this device driver 307 is put under the direct control of Security Kernel Module 101. In this way the audio behavior depends on Security Kernel Module state and communication currently established.

In a preferred embodiment digital samples are discarded when no clear nor crypto communication is established. In case of clear voice communication, digital samples are hijacked toward a cryptographic enabled audio pipe. The device is kept in a working state, fed with decoy sounds (e.g. some white noise, a pre-recorded message, ...). This will prevent spy-phone and malware from getting access to the actual audio samples. In case of crypto voice communication, digital samples are encrypted at the lowest possible level of abstraction (i.e. kernel level). Security Kernel Module encrypts them using the encryption key and algorithm stored into Security Core 105. Key selection is based on a proprietary key setup protocol. When audio samples leave the kernel they are in BLACK (i.e. encrypted) form already. The traditional Android audio device is kept busy as in the previous case. Any attempt to gather audio samples out of it will get only decoy sounds. Besides that,also attacks devoted to record audio samples at the application level, before encryption takes place, will fail because of the encryption technique employed. Once the signal is encoded it can be communicated to the user applications 309 and possibly transmitted through a network 311.

The decoding chain is operating in the reverse order. Digital samples coming from the user space are processed by Security Kernel Module 101. Depending upon Security Kernel Module state and established communication the behavior can be:
- In case of crypto voice communication, encrypted samples are decrypted using the keys and the algorithm stored in SC 105. Decrypted samples are then fed to the device driver to be sent to the hardware codec and then e.g. to speakers 313;
- In case of plain communication no encrypted data is allowed or accepted by SKM 101. All written data are discarded;
- When no communication is in place, no data is allowed through this interface. The behavior is the same as in the previous case.

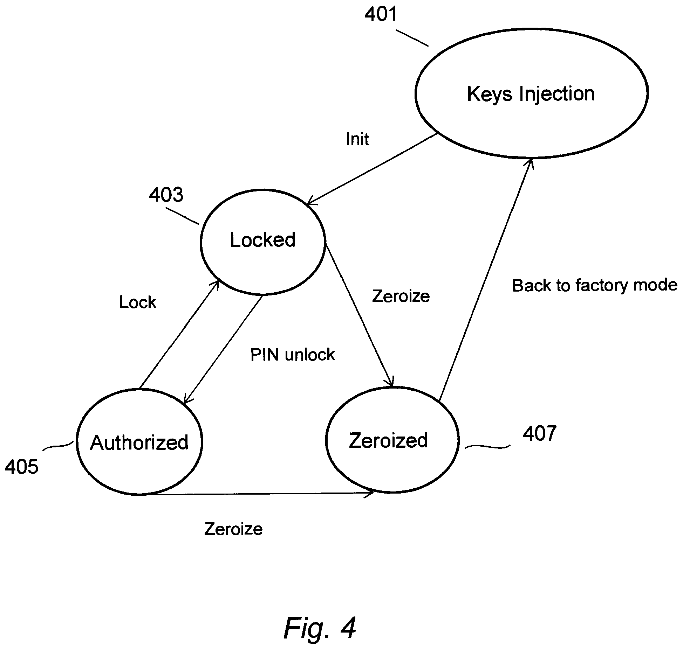

Figure 4 represents the stateful lifecycle of Security Kernel Module in the form of a finite state machine (FSM). FSM includes four possible states, namely:
- Keys injection (401);
- Locked (403);
- Authorized (405);
- Zeroized (407).

At the beginning of machine's lifecycle Security Kernel Module is in the Keys injection state. In this state it is not possible to use any of the secure applications offered by the phone. Login process can not be performed since no cryptographic material has been loaded yet. Keys injection process is performed in a centralized facility by a security officer (i.e. an administrator having the required authorisations) using the Key Distribution Centre (KDC). KDC is responsible for loading crypto material on the terminal, both keys and algorithms. After this process the unit is placed into the Locked state. Now the unit can be shipped to end users and is ready to operate.

Every time the telephone is booted, Security Kernel Module service is started. In this phase the system is said to be in the Locked state, where no crypto operations are possible. Depending on unit configuration other phone features, such as the clear voice calls, can be enabled or not. Security Kernel Module is responsible for supervising unit's policies and device integrity. In order to enable secure voice operation, the user might be requested to authenticate with the Security Kernel Module. User authentication is normally done through a PIN or a password, depending upon the use. To increase system security the PIN could be:
- Entered on a "scrambling" keyboard, where the position of each digit is random and it is changed at every keystroke;
- Post-processed, i.e. PIN value is combined by SKM with a symmetric key shared among SKM and SC. The result of this combination, called PIN*, represents the actual PIN value. The authentication between SKM and SC is then performed using this value.

The unit can also be zeroized while in Locked state: this transition is shown in Figure 4. The reason for this transition is to provide to users the ability to securely delete all the sensitive material in case of a security threat without the need for an authentication. In this case the system is placed in the Zeroized state.

Once that the authentication procedure is completed, (see transition PIN unlock in Figure 4) the phone is in the Authorized state. All the crypto operations are enabled and can now be performed.

Lastly the phone can be in the Zeroized state: when in this state all the cryptographic material contained both in the phone and in the SC is wiped. The unit can not operate anymore unless it is returned to the administration station where keys are generated and injected into units.

In the Keys Injection state the Security Kernel Module can not perform any activity. It only waits for the KDC to load the cryptographic material. When the loading is complete the machine is ready to operate.

A detailed example of the activities and commands which can be implemented according to the above described embodiment, is provided in the following paragraphs:
In the Locked state SKM performs the following activities:
LCK1. It controls the state of all the microphones. They are kept off unless a clear call is performed or in case that an application requires their activation, through a cryptographic authentication;
LCK2. It performs periodic integrity checks of the system;
LCK3. It controls the microSD access and usage. Only authorized microSD (SC ones) are allowed to be used;
LCK4. It provides dummy audio samples to applications not authenticated that try to access to audio devices;
LCK5. It continuously checks for kernel modules that need to be loaded at runtime. If some module has to be loaded, SKM is responsible for authenticating and deciphering the module object code and to load it into the kernel address space;
LCK6. It keeps under control read and write operations from and to the main flash memory. Each attempt to write some data to a forbidden location shall report a successful return code while the data shall be discarded;
LCK7. It controls GPS status and operations. Any not authorized application shall receive fake GPS coordinates;
LCK8. It prevents the installation of unauthorized software packages and updates, such as the Over The Air (OTA) ones;

In the Authorized state SKM performs the following activities:
AUTH1. It controls the state of all the microphones (see LCK1). Microphones shall be enabled in case of:
   - Clear, native GSM or UMTS voice call;
   - Encrypted UMTS voice call.
AUTH2. Same as LCK2;
AUTH3. Same as LCK3;
AUTH4. Same asLCK4;
AUTH5. It controls the microSD access, usage and programming interface. All protocol data units between the host smartphone and the microSD are handled by SKM.
AUTH6. Same as LCK6;
AUTH7. Same as LCK7. Depending upon the application, a dedicated SKM module can be activated to protect GPS coordinates. In such a case the current GPS position is encrypted and sent to user applications in black form. This value can be remotely transmitted in a secure way;
AUTH8. Same as LCK8;
AUTH9. SC module shall be unlocked in this state. All cryptographic information required to activate crypto functions shall be transferred from SC to SKM;
AUTH10. SKM periodically checks for zeroization events: in case of a zeroization occurs, all the cryptographic material on SC shall be destroyed. Moreover all the cryptographic materials on the SKM needs to be destroyed as well.
AUTH11. SKM actively protects all the communications between user space components and kernel space systems. This protection is carried out through a proprietary mechanism detailed in the following paragraphs;
AUTH12. SKM shall control the USB behavior. USB can either be configured as a "charging only" interface or it can support a cryptographic layer providing confidentiality and integrity check. In this second case a dedicated application shall be loaded on client machines to be able to communicate with the box;
AUTH13. SKM manages the privacy of user's data while stored on persistent storage. These data are deciphered "on demand" and made available to the authorized applications;
AUTH14. SKM manages the authentication and the deciphering of binary code. This binary code usually represents then main part of our product: SKM is used as an effective anti-theft method. All Telsy's IP are opened only after the user authenticates himself/herself with SKM and SC;
AUTH15. SKM is responsible for Voice Encryption. As stated in the previous paragraph, voice encryption need to be carefully considered: its implementation, in fact, shall be prepared at the lowest possible abstraction layers.

In the Zeroized state the phone can not perform any secure operation. The only possibility to bring it back to the Keys Injection state is to connect it to the Key Distribution Centre for a re-activation of both SKM and SC.

### Description of secure inter-process communication mechanism

All communication between security components on the phone is performed through a dedicated inter-process communication protocol, called Secure Signalling 2 (SS2). SS2 protocol allows to establish a secure point-to-point channel providing assurance about confidentiality and integrity of the transported information.

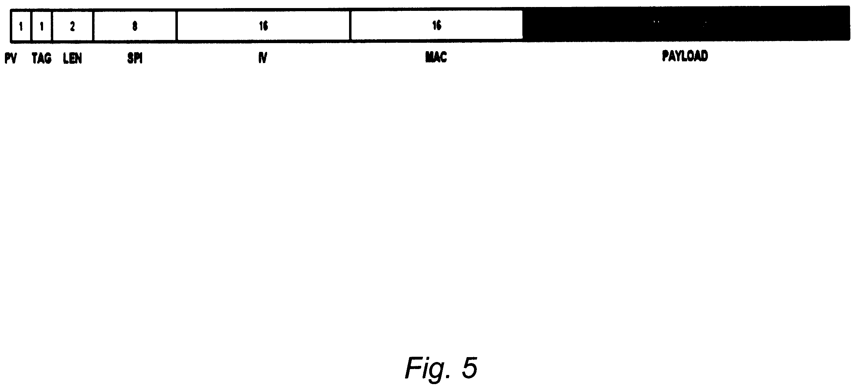

SS2 protocol data unit (PDU) is formatted as depicted in Figure 5. The meaning of PDU fields is as follows:
- PV (1 byte): Protocol Version. It indicates the version of the SS2 protocol used. It is needed to allow different SS2 protocol version to coexist;
- TAG (1 byte): PDU tag. It indicates the type of SS2 PDU transported. Through this value it is possible to identify different SS2 PDU, i.e.:
   ∘ Control PDU: used to set-up security associations, to perform key derivation procedure and to send control messages to the other end;
   ∘ Data PDU: used to transport data to be protected. Depending on the TAG value the payload can be transported with or without authentication code.
- SPI (8 bytes): Secure Packet Index, it is used to identify the set of pre-shared keys used in the communication and the algorithm used to protect the payload and for MAC operation.
- LEN (2 bytes): payload length, in bytes;
- IV (16 bytes): initialization vector, used for cryptographic operations on the payload;
- MAC(16 bytes): message authentication code, computed both on the header and on the encrypted payload.

SS2 channel can operate in two different modes:
- Pre-shared keys. In this case the channel can operate without the use of the Control PDU. The two parties use a couple of pre-shared keys (one key per each direction) to protect data. No key negotiation is performed.
- Pre-shared keys with ephemeral key. In this case the Data PDU can be generated only after an initial phase where the two parties exchange Control PDUs. Control PDUs are used in this case to:
   ∘ Agree on the pre-shared keys to be used in the communication;
   ∘ Perform an Elliptic Curve Diffie Hellman key exchange to derive an ephemeral key. Actual communication keys are obtained by combining pre-shared keys and ephemeral key using a non-invertible function.

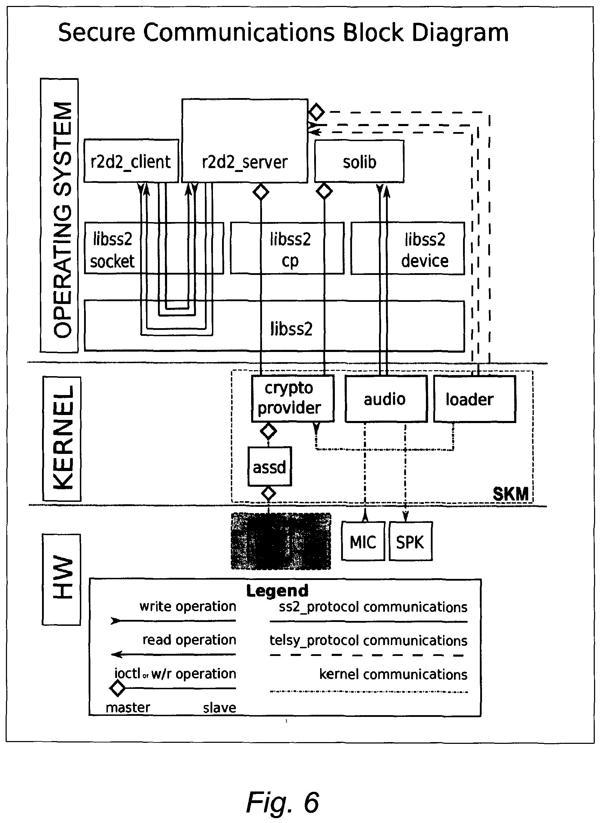

SS2 is used to protect all the communication between the user and the kernel space security components. For instance the secure voice application presents to the user space an encrypted audio device that sends and receives SS2 encoded frame only. Additionally it is used also between user space processes to share security relevant information. In Figure 6 a complete view of security components and their connection is depicted. It is relevant to note the following functional blocks:
- SKM is composed by four subsystems, i.e.:
   ∘ Crypto provider, responsible for all cryptographic material and operations;
   ∘ Audio, responsible for audio processing as described in the previous section;
   ∘ Loader, devoted to loading binary packages (executables, libraries or kernel modules) protected and authenticated;
   ∘ ASSD, a subsystem dedicated to perform communications with the microSD implementing SC.
- SC is implemented on an external microSD token.
- On the topmost part of the picture all the user space components are gathered. Their function is:
   ∘ r2d2_client: subsystem responsible for talking with r2d2_server process. This stub is used by other OS services that need to speak with the secure voice application;
   ∘ r2d2_server: subsystem responsible for performing a set of operations such as manage secure calls, implement secure SMS service, control SKM status and monitor system health;
   ∘ solib: a set of shared libraries that implement secure voice protocols. r2d2_server is able to select the proper one depending on phone's configuration. All these libraries are kept in encrypted form, deciphered on demand for the sole duration of the secure voice call.

The middle part of Figure 6 contains middleware libraries needed to implements SS2 protocol in user space.

The bottom part of Figure 6 shows examples of hardware components which are not included in the Kernel but controlled by the SKM; these hardware components include: a microSD card, a microphone, a speaker.

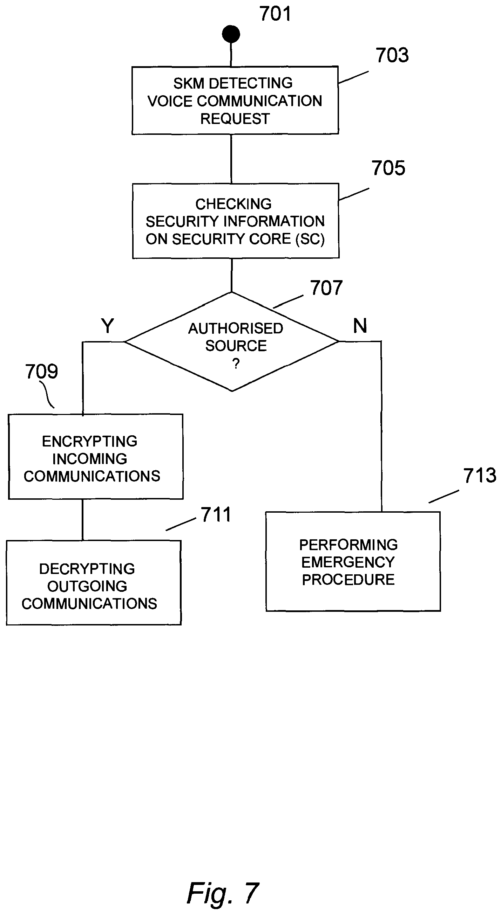

With reference to Figure 7, the logic flow of a method according to an embodiment of the invention is illustrated with a diagram. The method is described with reference to the operations of a communication device (e.g. smartphone, a tablet with communications capability) needing secure communications. The communication device according to the present example is a smartphone which includes a plurality of user communication applications, for implenting smartphone communication functions; a Security Kernel Module (SKM) controlling any input/output communication of the smartphone and being the only possible access between the plurality of user communication applications and the outside network; a Security Core module (SC), the Security Core module including device specific security information; all exchanges of information between the Security Core module and the Security Kernel Module and between the plurality of user communication applications and the Security Kernel Module being encrypted and the encryption being based on keys stored in the Security Core module. The smartphone also includes a set of input/output devices (e.g. a microphone, a loudspeaker, a network card, an antenna) adapted to interface the smartphone with one or more communication networks and with the outside environment (e.g. voice of human users). The method begins at the black start circle 701 and goes to box 703, where the system detects, through the SKM, a voice communication request. In a preferred embodiment of the present invention, a voice communication request can include an incoming call, a request from one of the user communication applications to make a call or to use one of the input/output devices, an incoming data transmission and any other event requesting to establish a communication between the smartphone and an outside communication system (e.g. a telephone network, a data network or any other communication procedure, including proximity based communication such as BlueTooth, NFC, infrared or RFID) or with one or more user. The control goes then to step 705 where the SKM checks the security information included in the SC to determine (step 707) whether the received voice communication request comes from an authorised source. If the source is authorized, the SKM makes sure that all communications inside the smartphone (i.e. all communications between the SC and the SKM and between the plurality of user communication applications and the SKM) are encrypted: to ensure this encrypted communications, the SKM encrypts any information received from the outside network before transmitting the information to the plurality of user applications (step 709) and decrypts any information received from the plurality of user communication applications before transmitting the information to the outside network (step 711). The encryption/decryption is based on information (e.g. keys) stored in the Security Core module. If the check of step 707 gives a negative result, the system assumes that the communication is non-secure and adopts an emergency procedure (713). Such emergency procedure can implement several actions, including e.g.: preventing any communications between the plurality of user communication applications and the outside network; erasing sensible information from SC; providing to the un-authorised source dummy audio samples.

The invention or part of it can take the form of an entirely hardware embodiment, an entirely software embodiment or an embodiment containing both hardware and software elements. For example, in the embodiment described above, the Security Core module is implemented with an hardware component (e.g. an SD chip card); however those skilled in the art will appreciate that a Security Core module having the same functionality can be realised via software. In a preferred embodiment, part of the invention is implemented in software, which includes but is not limited to firmware, resident software, microcode, etc.

Furthermore, the invention can take the form of a computer program product accessible from a computer-usable or computer-readable tangible medium providing program code for use by or in connection with a computer or any instruction execution system. For the purposes of this description, a computer-usable or computer readable medium can be any apparatus that can contain, store, communicate, propagate, or transport the program for use by or in connection with the instruction execution system, apparatus, or device.

The medium can be an electronic, magnetic, optical, electromagnetic, infrared, or semiconductor system (or apparatus or device) or a propagation medium. Examples of a computer-readable medium include a semiconductor or solid state memory, magnetic tape, a removable computer diskette, a random access memory (RAM), a read-only memory (ROM), a rigid magnetic disk and an optical disk. Current examples of optical disks include compact disk - read only memory (CD-ROM), compact disk - read/write (CD-R/W) and DVD.

A data processing system suitable for storing and/or executing program code will include at least one processor coupled directly or indirectly to memory elements through a system bus. The memory elements can include local memory employed during actual execution of the program code, bulk storage, and cache memories which provide temporary storage of at least some program code in order to reduce the number of times code must be retrieved from bulk storage during execution.

Input/output or I/O devices (including but not limited to keyboards, displays, pointing devices, etc.) can be coupled to the system either directly or through intervening I/O controllers.

## Claims

1. A method of securing communications through a communication device (100) connectable to a communication network to transmit and receive voice and data communications, the communication device including a processor running an Operating System; at least one user communication application being executed by the Operating System; a Security Kernel Module (101) embedded in the Operating System, the Security Kernel Module controlling input/output communications of the communication device and being the only possible access between the at least one user communication application and the communication network; a Security Core module (105) controlled by the Security Kernel Module including device specific security information; a plurality of input/output devices connected with the Security Kernel Module (101), all exchanges of information between the Security Core module (105) and the Security Kernel Module (101) and between the at least one user communication application and the Security Kernel Module (101) being encrypted by the security kernel module (101), the method including the steps of:
- the Security Kernel Module (101) intercepting a communication request;
- the Security Kernel Module (101) checking with security information on the Security Core module (105) whether the communication request comes from an authorised source;
- responsive to the source being authorised:
- the Security Kernel Module (101) encrypting any information received from the plurality of input/output devices before transmitting the information to the at least one user communication application, the encryption being based on keys stored in the Security Core module;
- the Security Kernel Module (101) decrypting any information received from the at least one user communication application before transmitting the information to at least one of the plurality of input/output devices;
- responsive to the source being not authorised the Security Kernel Module performing an emergency security procedure.

2. The method of claim 1 wherein the Security Core module (105) includes a hardware component.

3. The method of claim 2 wherein the Security Core module (105) includes a smart-card chip.

4. The method of any preceding claim wherein the at least one user communication application includes: voice applications, data communication applications, email applications, collaboration applications, instant messaging.

5. The method of any preceding claim wherein any input/output functions of the communication device are disabled during telephone standby periods.

6. The method of any preceding claim wherein emergency procedure includes preventing any communications between the at least one user communication application and the communication network.

7. The method of any preceding claim wherein emergency procedure includes erasing selected information to avoid un-authorised access to protected data.

8. The method of any preceding claim wherein emergency procedure includes providing to the un-authorised source dummy audio samples.

9. The method of any preceding claim wherein the communication request includes one or more of the following: an incoming call; a request from one of the at least one user communication application to make a call or to use one of the input/output devices; an incoming data transmission; an event requesting to establish a communication between the communication device and an outside communication system.

10. A communication device (100) for secure voice and data communications connectable to a communication network, the communication device including:
- a processor configured to run an Operating System;
- at least one user communication application (111) executable by the Operating System;
- a Security Kernel Module (101) embedded in the Operating System, the Security Kernel Module for controlling any input/output communication of the communication device and being the only possible access between the at least one user communication application and the communication network;
- a Security Core module (105) configured to be controlled by the Security Kernel Module including device specific security information;
- a plurality of input/output devices connected with the Security Kernel Module (101), the Security Kernel Module configured to encrypt all exchanges of information between the Security Core module (105) and the Security Kernel Module (101) and between the at least one user communication applications and the Security Kernel Module (101) (101) and to intercept any communication request; the Security Kernel Module (101) for checking with security information on the Security Core module (105) whether the communication request comes from an authorised source;
- responsive to the source being authorised:
- the Security Kernel Module (101) configured to encrypt any information received from the plurality of input/output devices before transmitting the information to the at least one user applications, the encryption being based on keys stored in the Security Core module (105);
- the Security Kernel Module (101) configured to decrypt any information received from the at least one user communication application before transmitting the information to at least one of the plurality of input/output devices;
- responsive to the source being not authorised the Security Kernel Module configured to perform an emergency security procedure.

11. The communication device of claim 10 wherein the Security Core module (105) includes a hardware component.

12. A smartphone for secure communication including one or more components adapted to perform the method of any claims 1 to 9.

13. A computer program comprising instructions for carrying out the steps of the method according to claim 1 to 9 when said computer program is executed on a computer.

14. A computer readable medium having encoded thereon a computer program according to claim 13.

## Patentansprüche

1. Ein Verfahren des Sicherns von Kommunikationen durch eine Kommunikationsvorrichtung (100), die mit einem Kommunikationsnetz verbunden werden kann, um Sprach- und Datenkommunikationen zu übertragen und zu empfangen, wobei die Kommunikationsvorrichtung Folgendes umfasst: einen Prozessor, der ein Betriebssystem betreibt; mindestens eine Benutzerkommunikationsanwendung, die durch das Betriebssystem ausgeführt wird; ein in dem Betriebssystem eingeschlossenes Sicherheitskernelmodul (101), wobei das Sicherheitskernmodul Eingabe-/Ausgabekommunikationen der Kommunikationsvorrichtung steuert und der einzige mögliche Zugang zwischen der mindestens einen Kommunikationsanwendung und dem Kommunikationsnetz ist; ein Sicherheitskernmodul (105), das durch das Sicherheitskernelmodul, das vorrichtungsspezifische Informationen umfasst, gesteuert wird; eine Vielzahl von Eingabe-/Ausgabevorrichtungen, die mit dem Sicherheitskernelmodul (101) verbunden ist, wobei jeglicher Austausch an Informationen zwischen dem Sicherheitskernmodul (105) und dem Sicherheitskernelmodul (101) und zwischen der mindestens einen Benutzerkommunikationsanwendung und dem Sicherheitskernelmodul (101) durch das Sicherheitskernnelmodul (101) verschlüsselt wird, wobei das Verfahren die folgenden Schritte umfasst:
- Abfangen einer Kommunikationsanfrage durch das Sicherheitskernelmodul (101);
- Überprüfen mit Sicherheitsinformationen auf dem Sicherheitskernmodul (105) durch das Sicherheitskernelmodul (101), ob die Kommunikationsanfrage aus einer autorisierten Quelle kommt;
- reagierend darauf, dass die Quelle autorisiert ist:
- Verschlüsseln jeglicher Informationen, die von der Vielzahl von Eingabe-/Ausgabevorrichtungen empfangen werden, durch das Sicherheitskernelmodul (101) vor dem Übertragen der Informationen an die mindestens eine Kommunikationsanwendung, wobei die Verschlüssselung auf Schlüsseln basiert, die in dem Sicherheitskernmodul gespeichert sind;
- Entschlüsseln jeglicher Informationen, die von der mindestens einen Benutzerkommunikationsanwendung empfangen werden, durch das Sicherheitskernelmodul (101) vor dem Übertragen der Informationen an die mindestens eine der Vielzahl von Eingabe-/Ausgabevorrichtungen;
- reagierend darauf, dass die Quelle nicht autorisiert ist, Durchführen eines Notfallsicherheitsvorgangs durch das Sicherheitskernelmodul.

2. Verfahren gemäß Anspruch 1, wobei das Sicherheitskernmodul (105) eine Hardwarekomponente umfasst.

3. Verfahren gemäß Anspruch 2, wobei das Sicherheitskernmodul (105) einen Smart-Card-Chip umfasst.

4. Verfahren gemäß einem der vorhergehenden Ansprüche, wobei die mindestens eine Benutzerkommunikationsanwendung Folgendes umfasst: Sprachapplikationen, Datenkommunikationsapplikationen, E-Mail-Applikationen, Kollaborationsapplikationen, Sofortnachrichten.

5. Verfahren gemäß einem der vorhergehenden Ansprüche, wobei jegliche Eingabe-/Ausgabefunktionen der Kommunikationsvorrichtung während Telefonstandbyzeiträumen deaktiviert werden.

6. Verfahren gemäß einem der vorhergehenden Ansprüche, wobei der Notfallvorgang das Verhindern jeglicher Kommunikationen zwischen der mindestens einen Benutzerkommunikationsanwendung und dem Kommunikationsnetz umfasst.

7. Verfahren gemäß einem der vorhergehenden Ansprüche, wobei der Notfallvorgang das Auslöschen ausgewählter Informationen umfasst, um nicht autorisierten Zugang zu geschützten Daten zu vermeiden.

8. Verfahren gemäß einem der vorhergehenden Ansprüche, wobei der Notfallvorgang das Bereitstellen von Blindaudioproben an die nicht autorisierte Quelle umfasst.

9. Verfahren gemäß einem der vorhergehenden Ansprüche, wobei die Kommunikationsanfrage eines oder mehrere der Folgenden umfasst: einen eingehenden Anruf; eine Anfrage von einer der mindestens einen Benutzerkommunikationsanwendung, einen Anruf vorzunehmen oder eine der Eingabe-/Ausgabevorrichtungen zu verwenden; eine eingehende Datenübertragung; einen Vorgang, der anfordert, eine Kommunikation zwischen der Kommunikationsvorrichtung und einem externen Kommunikationssystem aufzubauen.

10. Eine Kommunikationsvorrichtung (100) für sichere Sprach- und Datenkommunikationen, die mit einem Kommunikationsnetz verbunden werden kann, wobei die Kommunikationsvorrichtung Folgendes umfasst:
- einen Prozessor, der konfiguriert ist, um ein Betriebssystem zu betreiben:
- mindestens eine Benutzerkommunikationsanwendung (111), die durch das Betriebssystem ausgeführt werden kann;
- ein Sicherheitskernelmodul (101), eingebettet in das Betriebssystem, wobei das Sicherheitskernelmodul zum Steuern jeglicher Eingabe-/Ausgabekommunikationen der Kommunikationsvorrichtung ist und der einzige mögliche Zugang zwischen der mindestens einen Benutzerkommunikationsanwendung und dem Kommunikationsnetz ist;
- ein Sicherheitskernmodul (105), das konfiguriert ist, um durch das Sicherheitskernelmodul, das vorrichtungsspezifische Sicherheitsinformationen umfasst, gesteuert zu werden;
- eine Vielzahl von Eingabe-/Ausgabevorrichtungen, die mit dem Sicherheitskernelmodul (101) verbunden ist, wobei das Sicherheitskernelmodul konfiguriert ist, um jeglichen Austausch von Informationen zwischen dem Sicherheitskernmodul (105) und dem Sicherheitskernelmodul (101) und zwischen den mindestens einen Benutzerkommunikationsanwendungen und dem Sicherheitskernelmodul (101) zu verschlüsseln und jegliche Kommunikationsanfrage abzufangen;
- das Sicherheitskernelmodul (101) zum Überprüfen mit Sicherheitsinformationen auf dem Sicherheitskernmodul (105), ob die Kommunikationsanfrage aus einer autorisierten Quelle kommt;
- reagierend darauf, dass die Quelle autorisiert ist:
- das Sicherheitskernelmodul (101) konfiguriert ist, um jegliche Informationen, die aus der Vielzahl von Eingabe-/Ausgabevorrichtungen empfangen werden, zu verschlüsseln, bevor die Informationen an die mindestens eine Benutzeranwendung übertragen werden, wobei die Verschlüsselung auf Schlüsseln basiert, die in dem Sicherheitskernmodul (105) gespeichert sind;
- das Sicherheitskernelmodul (101) konfiguriert ist, um jegliche Inforationen, empfangen von der mindestens einen Benutzerkommunikationsanwendung, zu entschlüsseln, bevor die Informationen an mindestens eine der Vielzahl von Eingabe-/Ausgabevorrichtungen übertragen werden;
- reagierend darauf, dass die Quelle nicht autorisiert ist, das Sicherheitskernelmodul konfiguriert ist, um einen Notfallsicherheitsvorgang durchzuführen.

11. Kommunikationsvorrichtung gemäß Anspruch 10, wobei das Sicherheitskernmodul (105) eine Hardwarekomponente umfasst.

12. Ein Smartphone zur sicheren Kommunikation, das eine oder mehrere Komponenten umfasst, die dazu ausgelegt sind, das Verfahren gemäß einem der Ansprüche 1 bis 9 durchzuführen.

13. Ein Computerprogramm, das Anweisungen zum Ausführen der Schritte des Verfahrens gemäß Anspruch 1 bis 9 beinhaltet, wenn das Computerprogramm auf einem Computer ausgeführt wird.

14. Ein computerlesbarer Datenträger, der darauf codiert ein Computerprogramm gemäß Anspruch 13 aufweist.

## Revendications

1. Un procédé de sécurisation des communications via un dispositif de communication (100) pouvant être connecté à un réseau de communication pour émettre et recevoir des communications vocales et de données, le dispositif de communication incluant un processeur exécutant un Système d'Exploitation ;
au moins une application de communication utilisateur en cours d'exécution par le Système d'Exploitation ; un Module Noyau de Sécurité (101) intégré dans le Système d'Exploitation, le Module Noyau de Sécurité contrôlant les communications d'entrée/de sortie du dispositif de communication et étant le seul accès possible entre l'au moins une application de communication utilisateur et le réseau de communication ; un Module Central de Sécurité (105) contrôlé par le Module Noyau de Sécurité incluant des informations de sécurité spécifiques au dispositif ; une pluralité de dispositifs d'entrée/de sortie connectés au Module Noyau de Sécurité (101), tous les échanges d'information entre le Module Central de Sécurité (105) et le Module Noyau de Sécurité (101) et entre l'au moins une application de communication utilisateur et le Module Noyau de Sécurité (101) étant chiffrés par le Module Noyau de Sécurité (101),
le procédé incluant les étapes :
- d'interception par le Module Noyau de Sécurité (101) d'une demande de communication ;
- de vérification par le Module Noyau de Sécurité (101), en vérifiant avec les informations de sécurité sur le Module Central de Sécurité (105) si la demande de communication provient d'une source autorisée ;
- en réponse au fait que la source est autorisée :
- le chiffrage par le Module Noyau de Sécurité (101) de toute information reçue de la pluralité de dispositifs d'entrée/de sortie avant d'émettre les informations à l'au moins une application de communication utilisateur, le chiffrement étant basé sur des clés stockées dans le Module Central de Sécurité ;
- le déchiffrement par le Module Noyau de Sécurité (101) de toutes les informations reçues de l'au moins une application de communication utilisateur avant d'émettre les informations à au moins un dispositif parmi la pluralité de dispositifs d'entrée/sortie ;
- en réponse au fait que la source n'est pas autorisée, le Module Noyau de Sécurité effectue une procédure de sécurité d'urgence.

2. Le procédé de la revendication 1 dans lequel le Module Central de Sécurité (105) inclut un composant matériel.

3. Le procédé de la revendication 2 dans lequel le Module Central de Sécurité (105) inclut une puce de carte intelligente.

4. Le procédé de n'importe quelle revendication précédente dans lequel l'au moins une application de communication utilisateur inclut : des applications vocales, des applications de communication de données, des applications de messagerie électronique, des applications de collaboration, une messagerie instantanée.

5. Le procédé de n'importe quelle revendication précédente dans lequel toutes fonctions d'entrée/de sortie du dispositif de communication sont désactivées pendant les périodes de veille du téléphone.

6. Le procédé de n'importe quelle revendication précédente dans lequel la procédure d'urgence inclut l'interdiction de toutes communications entre l'au moins une application de communication utilisateur et le réseau de communication.

7. Le procédé de n'importe quelle revendication précédente dans lequel la procédure d'urgence inclut l'effacement des informations sélectionnées pour éviter un accès non autorisé à des données protégées.

8. Le procédé de n'importe quelle revendication précédente dans lequel la procédure d'urgence inclut la fourniture à la source non autorisée d'échantillons audio factices.

9. Le procédé de n'importe quelle revendication précédente dans lequel la demande de communication inclut un ou plusieurs des éléments suivants : un appel entrant ; une demande de l'une des au moins une application de communication utilisateur de passer un appel ou d'utiliser l'un des dispositifs d'entrée/de sortie ; une émission de données entrantes ; un événement demandant d'établir une communication entre le dispositif de communication et un système de communication extérieur.

10. Un dispositif de communication (100) pour des communications vocales et de données sécurisées pouvant être connecté à un réseau de communication, le dispositif de communication incluant :
- un processeur configuré pour exécuter un Système d'Exploitation ;
- au moins une application de communication utilisateur (111) exécutable par le Système d'Exploitation ;
- un Module Noyau de Sécurité (101) intégré dans le Système d'Exploitation, le Module Noyau de Sécurité étant destiné à contrôler toute communication d'entrée/de sortie du dispositif de communication et étant le seul accès possible entre l'au moins une application de communication utilisateur et le réseau de communication ;
- un Module Central de Sécurité (105) configuré pour être contrôlé par le Module Noyau de Sécurité incluant des informations de sécurité spécifiques au dispositif ;
- une pluralité de dispositifs d'entrée/de sortie connectés au Module Noyau de Sécurité (101), le Module Noyau de Sécurité configuré pour chiffrer tous les échanges d'information entre le Module Central de Sécurité (105) et le Module Noyau de Sécurité (101) et entre l'au moins une application de communication utilisateur et le Module Noyau de Sécurité (101) et pour intercepter toute demande de communication ;
- le Module Noyau de Sécurité (101) destiné à vérifier, avec les informations de sécurité sur le Module Central de Sécurité (105), si la demande de communication provient d'une source autorisée ;
- en réponse à l'autorisation de la source :
- le Module Noyau de Sécurité (101) configuré pour chiffrer toute information reçue de la pluralité de dispositifs d'entrée/de sortie avant d'émettre les informations à l'au moins une application utilisateur, le chiffrement étant basé sur des clés stockées dans le Module Central de Sécurité (105) ;
- le Module Noyau de Sécurité (101) configuré pour déchiffrer toute information reçue de l'au moins une application de communication utilisateur avant d'émettre les informations à au moins un dispositif parmi la pluralité de dispositifs d'entrée/de sortie ;
- en réponse au fait que la source n'est pas autorisée, le Module Noyau de Sécurité configuré pour effectuer une procédure de sécurité d'urgence.

11. Le dispositif de communication de la revendication 10 dans lequel le Module Central de Sécurité (105) inclut un composant matériel.

12. Un téléphone intelligent destiné à communiquer de façon sécurisée incluant un ou plusieurs composants conçus pour effectuer le procédé de n'importe quelles revendications 1 à 9.

13. Un programme d'ordinateur comprenant des instructions pour mettre en oeuvre les étapes du procédé selon les revendications 1 à 9 lorsque ledit programme d'ordinateur est exécuté sur un ordinateur.

14. Un support lisible par ordinateur ayant un programme d'ordinateur codé sur celui-ci selon la revendication 13.
